# EUROPEAN PATENT APPLICATION

(11) **EP 2 595 293 A2**
(43) Date of publication of application: **22.05.2013**
(21) Application number: 12192298.3
(22) Date of filing: 12.11.2012
(51) Int. Cl.: H02M 1/36, H02M 7/00

(54) **Precharging and clamping system for an electric power system and method of operating the same**

(30) Priority: 14.11.2011 US 201113295591
(71) Applicant: General Electric Company, Schenectady, New York 12345 (US)
(72) Inventor: Zhu, Huibin, Salem, VA Virginia 24153 (US); Smith, David, Salem, VA Virginia 24153 (US); Wilmer, David Scott, Salem, VA Virginia 24153 (US)
(74) Representative: Picker, Madeline Margaret

(57) **Abstract**

A power converter (104) includes a plurality of direct current (DC) conduits (132/133) and a precharging and clamping circuit coupled to the DC conduits. The precharging and clamping circuit includes at least one diode (228/230/232/234/236/238), at least one switching device (212/214/216/218/220/222/ 224/226) coupled in parallel with the diode, and at least one contactor device (208/209/405/407/409) coupled to an alternating current (AC) source (106) and the diode. The at least one contactor device is configured to facilitate alternating said precharging and clamping circuit between precharging operation and voltage clamping operation.

## Description

### BACKGROUND OF THE INVENTION

The subject matter described herein relates generally to controlling operation of electric power systems, and more specifically, to equipment and methods to precharge and clamp power converters.

In some known renewable energy systems, e.g., solar power generation facilities, a plurality of photovoltaic panels (also known as solar panels) are logically or physically grouped together to form an array of solar panels. The solar panel array converts solar energy into electrical power and transmits the power to an electrical power grid or other destination. Solar panels typically generate direct current (DC) electrical power. To properly couple such solar panels to an electrical grid, the DC electrical power received from the solar panels must be converted to alternating current (AC) electrical power. At least some known power systems use a power converter to convert DC power to AC power. Such power converters include a plurality of DC buses that couple the DC power source, i.e., the solar panels to an inverter that converts the DC power to AC power with a predetermined voltage and frequency suitable for use on the electric power grid.

At least some known renewable energy facilities include a dynamic discharge, i.e., overvoltage clamping circuit used across the DC buses to clamp a potential bus overvoltage condition. Such over-voltage conditions may be induced by grid fault events, e.g., low-voltage ride through (LVRT) and zero-voltage ride-through (ZVRT) transients. Some known clamping circuits include at least one fast switching device, e.g., an insulated gate bipolar transistor (IGBT) or a silicon-controlled rectifier (SCR), in series with a resistor device. In the event of a voltage surge on the DC buses, the switching devices of the clamping circuit will close and transmit DC current to the resistor device, wherein the electric current is dissipated as heat energy. Alternatively, some known clamping circuits include a switching device proximate the electric power grid. Such clamping circuit is configured to redirect electric current transmitted to and/or from the electric power grid to control the voltage on the DC buses by controlling the flow of electric power therethrough. In renewable-type distributed generation (DG) devices, such as residential wind and solar devices, an additional clamping circuit may be used at the renewable energy source to divert electric power generated by the power source away from the DC buses.

Many known renewable energy facilities also include a precharging circuit coupled to the DC buses. At least some known precharging circuits include a plurality of precharge contactors coupled to the electric power grid, a rectification device, and a plurality of resistor devices to energize the DC buses prior to energization from the renewable energy source. Many known renewable energy installations are cost-constrained and space-constrained. Therefore, for some renewable energy facilities, one or both of the clamping circuit and the precharging circuit may be excluded due to cost and space constraints.

### BRIEF DESCRIPTION OF THE INVENTION

In one aspect, a power converter includes a plurality of direct current (DC) conduits and a precharging and clamping circuit coupled to the DC conduits. The precharging and clamping circuit includes at least one diode, at least one switching device coupled in parallel with the diode, and at least one contactor device coupled to an alternating current (AC) source and the diode. The contactor device is configured to facilitate alternating the precharging and clamping circuit between precharging operation and voltage clamping operation.

In another aspect, a method of operating a renewable electric power generation facility is provided. The method includes energizing at least one direct current (DC) conduit that includes closing at least one contactor and coupling at least one diode to an alternating current (AC) source. The method also includes discharging electric power from the DC conduit by opening the contactor and placing at least one switching device in an on condition.

In yet another aspect, a renewable energy generation facility includes at least one renewable energy source and a power converter coupled to the renewable energy source. The power converter includes a plurality of direct current (DC) conduits and a precharging and clamping circuit coupled to the DC conduits. The precharging and clamping circuit includes at least one diode, at least one switching device coupled in parallel with the diode, and at least one contactor device coupled to an alternating current (AC) source and the diode. The contactor device is configured to facilitate alternating the precharging and clamping circuit between precharging operation and voltage clamping operation.

### BRIEF DESCRIPTION OF THE DRAWINGS

FIG. 1 is a schematic diagram of an example renewable electric power generation facility.
FIG. 2 is a schematic diagram of an alternative example renewable electric power generation facility.
FIG. 3 is a flow chart of an example method of operating the renewable electric power generation facilities shown in FIGs. 1 and 2.

### DETAILED DESCRIPTION OF EMBODIMENTS OF THE INVENTION

As used herein, the term "blade" is intended to be representative of any device that provides reactive force when in motion relative to a surrounding fluid. As used herein, the term "wind turbine" is intended to be representative of any device that generates rotational energy from wind energy, and more specifically, converts kinetic energy of wind into mechanical energy. As used herein, the term "wind turbine generator" is intended to be representative of any wind turbine that generates electrical power from rotational energy generated from wind energy, and more specifically, converts mechanical energy converted from kinetic energy of wind to electrical power. As used herein, the terms "clamping circuit" and "clamping device" are intended to be representative of any overvoltage clamping devices, i.e., those devices that clamp voltage on a portion of a circuit to an upper parameter.

Technical features of the methods, apparatus, and systems described herein include at least one of: (a) compacting precharging and clamping circuits into one circuit using common equipment; and (b) facilitating installation of precharging and clamping features with renewable energy sources that owner/operators may otherwise not install due to cost and space constraints.

The methods, apparatus, and systems described herein facilitate combining precharging and clamping circuits for renewable energy sources into one circuit using common equipment. As described herein, such combinations facilitate decreasing cost and space requirements of renewable energy resource facilities, thereby facilitating increased use of renewable energy sources within a mixed-source electric power system.

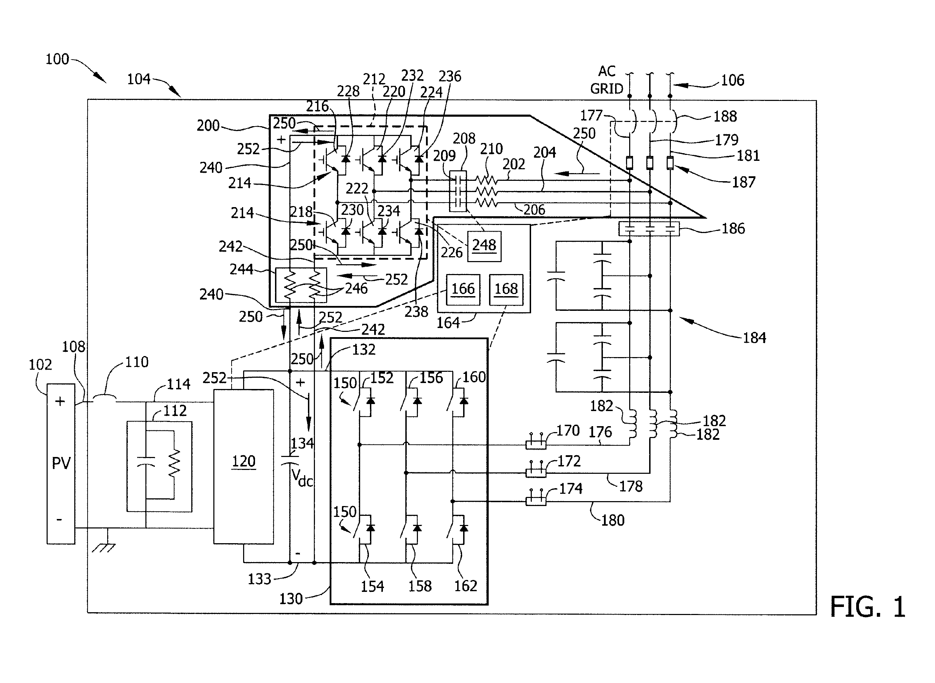

FIG. 1 is a schematic diagram of an example electric power system, i.e., a power generation facility 100 that includes a plurality of renewable power generation units, such as a plurality of solar panels (not shown) that form at least one solar array 102. Alternatively, power generation facility 100 includes any suitable number and type of power generation units, such as a plurality of wind turbines, fuel cells, geothermal generators, hydropower generators, and/or other devices that generate power from renewable and/or non-renewable energy sources.

In the example embodiment, power generation facility 100 and/or solar array 102 includes any number of solar panels to facilitate operating power generation facility 100 at a desired power output. In one embodiment, power generation facility 100 includes a plurality of solar panels and/or solar arrays 102 coupled together in a series-parallel configuration to facilitate generating a desired current and/or voltage output from power generation facility 100. Solar panels include, in one embodiment, one or more of a photovoltaic panel, a solar thermal collector, or any other device that converts solar energy to electrical energy. In the example embodiment, each solar panel is a photovoltaic panel that generates a substantially direct current (DC) power as a result of solar energy striking solar panels.

In the example embodiment, solar array 102 is coupled to a power conversion assembly 104, i.e., a power converter 104, that converts the DC power to alternating current (AC) power. The AC power is transmitted to an electrical distribution network 106, or "grid", and network 106 may also act as an AC power source. Power converter 104, in the example embodiment, adjusts an amplitude of the voltage and/or current of the converted AC power to an amplitude suitable for electrical distribution network 106, and provides AC power at a frequency and a phase that are substantially equal to the frequency and phase of electrical distribution network 106. Moreover, in the example embodiment, power converter 104 provides three phase AC power to electrical distribution network 106. Alternatively, power converter 104 provides single phase AC power or any other number of phases of AC power to electrical distribution network 106.

DC power generated by solar array 102, in the example embodiment, is transmitted through a converter conductor 108 coupled to power converter 104. In the example embodiment, a current protection device 110 electrically disconnects solar array 102 from power converter 104, for example, if an error or a fault occurs within power generation facility 100. As used herein, the terms "disconnect" and "decouple" are used interchangeably, and the terms "connect" and "couple" are used interchangeably. Current protection device 110 is a circuit breaker, a fuse, a contactor, and/or any other device that enables solar array 102 to be controllably disconnected from power converter 104. A DC filter 112 is coupled to converter conductor 108 for use in filtering an input voltage and/or current received from solar array 102.

Converter conductor 108, in the example embodiment, is coupled to a single input conductor 114. Alternatively, the input current transmitted from solar array 102 to converter 104 may be transmitted through any number of input conductors 114 that enables power generation facility 100 to function as described herein. In the example embodiment, power converter 104 includes a DC-to-DC boost chopper 120 coupled to input conductor 114. Boost chopper 120 facilitates filtering the input voltage and/or current received from solar array 102. In addition, at least a portion of the energy received from solar array 102 is temporarily stored within boost chopper 120. Some embodiments of boost chopper 120 include at least one input current sensor (not shown) to measure the current flowing through input conductor 114.

Also, in the example embodiment, DC-to-DC boost chopper 120 and an inverter 130 are coupled together by a positive DC bus 132 and a negative DC bus 133. DC buses 132 and 133 are sometimes referred to as a "DC link." Boost chopper 120 is coupled to, and receives DC power from, solar array 102 through input conductor 114. Moreover, boost chopper 120 adjusts the voltage and/or current amplitude of the DC power received. In the example embodiment, inverter 130 is a DC-to-AC inverter that converts DC power received from boost chopper 120 into AC power for transmission to electrical distribution network 106. Alternatively, for those embodiments that include electric power generation devices such as, without limitation, wind turbines, that generate a variable AC frequency and voltage, boost chopper 120 may be replaced with, or supplemented with, an electrical rectification device such that power converter 104 would be a full power conversion assembly. Moreover, in the example embodiment, DC buses 132 and 133 include at least one capacitor 134 coupled therebetween. Alternatively, DC buses 132 and 133 include a plurality of capacitors 134 and/or any other electrical power storage devices that enable power converter 104 to function as described herein. As current is transmitted through power converter 104, a voltage is generated across DC buses 132 and 133 and energy is stored within capacitors 134.

Inverter 130, in the example embodiment, includes two inverter switches 150 coupled together in serial arrangement for each phase of electrical power that power converter 104 produces. In the example embodiment, inverter switches 150 are fast switching semiconductor devices, e.g., insulated gate bipolar transistors (IGBTs). Alternatively, inverter switches 150 are any other suitable transistor or any other suitable fast switching device, including, without limitation, gate turn-off thyristors (GTOs), silicon-controlled rectifiers (SCRs), metal oxide semiconductor field-effect transistors (MOSFETs), and bipolar junction transistors (BJTs). Moreover, each pair of inverter switches 150 for each phase is coupled in parallel with each pair of inverter switches 150 for each other phase. As such, for a three phase power converter 104, inverter 130 includes a first inverter switch 152 coupled in series with a second inverter switch 154, a third inverter switch 156 coupled in series with a fourth inverter switch 158, and a fifth inverter switch 160 coupled in series with a sixth inverter switch 162. First and second inverter switches 152 and 154 are coupled in parallel with third and fourth inverter switches 156 and 158, and with fifth and sixth inverter switches 160 and 162. Alternatively, inverter 130 may include any suitable number of inverter switches 150 arranged in any suitable configuration.

Power converter 104 includes a control system 164 that includes a boost chopper controller 166 and an inverter controller 168. Boost chopper controller 166 is coupled to, and controls an operation of, boost chopper 120. More specifically, in the example embodiment, boost chopper controller 166 operates boost chopper 120 to maximize the power received from solar array 102. Inverter controller 168 is coupled to, and controls the operation of, inverter 130. More specifically, in the example embodiment, inverter controller 168 operates inverter 130 to regulate the voltage across DC buses 132 and 133 and/or to adjust the voltage, current, phase, frequency, and/or any other characteristic of the power output from inverter 130 to substantially match the characteristics of electrical distribution network 106.

In the example embodiment, control system 164, boost chopper controller 166, and/or inverter controller 168 include and/or are implemented by at least one processor. As used herein, the processor includes any suitable programmable circuit such as, without limitation, one or more systems and microcontrollers, microprocessors, reduced instruction set circuits (RISC), application specific integrated circuits (ASIC), programmable logic circuits (PLC), field programmable gate arrays (FPGA), and/or any other circuit capable of executing the functions described herein. The above represent examples only, and thus are not intended to limit in any way the definition and/or meaning of the term "processor." In addition, control system 164, boost chopper controller 166, and/or inverter controller 168 include at least one memory device (not shown) that stores non-transient computer-executable instructions and data, such as operating data, parameters, setpoints, threshold values, and/or any other data that enables control system 164 to function as described herein.

Boost chopper controller 166, in the example embodiment, receives voltage and current measurements from input voltage and current sensors, respectively (not shown). Inverter controller 168, in the example embodiment, receives current measurements from a first output current sensor 170, a second output current sensor 172, and a third output current sensor 174. Moreover, inverter controller 168 receives measurements of a voltage output from inverter 130 from a plurality of output voltage sensors (not shown). In the example embodiment, boost chopper controller 166 and/or inverter controller 168 receive voltage measurements of the voltage of DC buses 132 and 133 from a DC bus voltage sensor (not shown).

In the example embodiment, inverter 130 is coupled to electrical distribution network 106 by a first output conductor 176, a second output conductor 178, and a third output conductor 180. Moreover, in the example embodiment, inverter 130 provides a first phase of AC power to electrical distribution network 106 through first output conductor 176, a second phase of AC power to electrical distribution network 106 through second output conductor 178, and a third phase of AC power to electrical distribution network 106 through third output conductor 180. First output current sensor 170 is coupled to first output conductor 176 for measuring the current flowing through first output conductor 176. Second output current sensor 172 is coupled to second output conductor 178 for measuring the current flowing through second output conductor 178, and third output current sensor 174 is coupled to third output conductor 180 for measuring the current flowing through third output conductor 180.

At least one inductor 182 is coupled to each of first output conductor 176, second output conductor 178, and third output conductor 180. Inductors 182 facilitate filtering the output voltage and/or current received from inverter 130. Moreover, in the example embodiment, a plurality of AC filters 184 are coupled to first output conductor 176, second output conductor 178, and third output conductor 180 for use in filtering an output voltage and/or current received from conductors 176, 178, and 180.

In the example embodiment, a first connecting conductor 177, a second connecting conductor 179, and a third connecting conductor 181 are coupled to and extend from first output conductor 176, second output conductor 178, and third output conductor 180, respectively. At least one contactor 186 is coupled to each pair of first output and connecting conductors 176 and 177, respectively, second output conductor 178 and second connecting conductor 179, respectively, and third output conductor 180 and third connecting conductor 181, respectively. Contactors 186 electrically disconnect inverter 130 from first connecting conductor 177, second connecting conductor 179, and third connecting conductor 181, for example, if an error or a fault occurs within power generation facility 100.

At least one fuse 187 and a disconnect switch 188 are coupled to first connecting conductor 177, second connecting conductor 179, and third connecting conductor 181. Fuses 187 and disconnect switches 188, in a manner similar to contactors 186, electrically disconnect inverter 130 from electrical distribution network 106, for example, if an error or a fault occurs within power generation facility 100. Moreover, in the example embodiment, protection device 110, contactors 186 and disconnect switches 188 are controlled by control system 164. Alternatively, protection device 110, contactors 186 and/or disconnect switches 188 are controlled by any other system that enables power converter 104 to function as described herein.

Power converter 104 also includes a combined precharging and clamping circuit 200. Precharging and clamping circuit 200 includes a first precharging conduit 202, a second precharging conduit 204, and a third precharging conduit 206 coupled to first connecting conductor 177, second connecting conductor 179, and third connecting conductor 181, respectively. Precharging and clamping circuit 200 also includes a precharge contactor assembly 208 including a contactor 209 coupled to each of first precharging conduit 202, second precharging conduit 204, and third precharging conduit 206. Each contactor 209 includes two discrete positions, i.e., a normally closed position and an open position. When starting power generation facility 100, contactors 209 are in the normally closed position to energize DC buses 132 and 133 from electrical distribution network 106, as described further below. Upon completion of precharging DC buses 132 and 133, contactors 209 are opened. Precharging and clamping circuit 200 further includes a plurality of precharge resistors 210, i.e., a precharge resistor 210 coupled to each of first precharging conduit 202, second precharging conduit 204, and third precharging conduit 206.

Precharging and clamping circuit 200 also includes a switching assembly 212. Switching assembly 212, in the example embodiment, includes two switching devices 214 coupled together in serial arrangement for each phase of electrical power that first precharging conduit 202, second precharging conduit 204, and third precharging conduit 206 transmit. In the example embodiment, switching devices 214 are fast switching semiconductor devices, e.g., IGBTs. Alternatively, switching devices 214 are any other suitable transistor or any other suitable fast switching device, including, without limitation, gate turn-off thyristors (GTOs), silicon-controlled rectifiers (SCRs), metal oxide semiconductor field-effect transistors (MOSFETs), and bipolar junction transistors (BJTs). Moreover, each pair of switching devices 214 for each phase is coupled in parallel with each pair of switching devices 214 for each other phase.

As such, for three phase power converter 104, switching assembly 212 includes a first switching device 216 coupled in series with a second switching device 218, a third switching device 220 coupled in series with a fourth switching device 222, and a fifth switching device 224 coupled in series with a sixth switching device 226. First and second switching devices 216 and 218 are coupled in parallel with third and fourth switching devices 220 and 222, and with fifth and sixth switching devices 224 and 226. Alternatively, switching assembly 212 may include any suitable number of switching devices 214 arranged in any suitable configuration. Further, in order to limit transient current values below a predetermined parameter of switching devices 214, a current sensor (not shown) may be coupled to each of devices 214 for monitoring and protection. During precharging operation, switching devices 214 remain in an OFF condition. During voltage clamping operation, switching devices are switched to an ON condition. Both precharging and voltage clamping operations are described further below.

Switching assembly 212 also includes a plurality of diodes, i.e., a first diode 228 coupled in parallel with first switching device 216, a second diode 230 coupled in parallel with second switching device 218, a third diode 232 coupled in parallel with third switching device 220, a fourth diode 234 coupled in parallel with fourth switching device 222, a fifth diode 236 coupled in parallel with fifth switching device 224, and a sixth diode 238 coupled in parallel with sixth switching device 226. Diodes 228 through 238 facilitate charging DC buses 132 and 133 during precharging operation.

Switching assembly 212 is coupled to DC buses 132 and 133 by a positive DC conduit 240 and a negative DC conduit 242 and a clamping resistor bank 244. Resistor bank 244 includes a plurality of clamping resistors 246 coupled to each of DC conduits 240 and 242. Clamping resistor bank 244 facilitates control of voltage on DC buses 132 and 133 during clamping operation. In addition, clamping resistors 246 cooperate with precharge resistors 210 during precharging operation to control the rate of charging of DC buses 132 and 133.

Further, in the example embodiment, control system 164 includes a precharging/clamping controller 248 that is similar in construction and operation to boost chopper controller 166 and inverter controller 168. Precharging/clamping controller 248 controls the pulse-width modulation (PWM) gating operations of switching devices 214 during clamping operation. Precharging/clamping controller 248 also controls opening and closing of contactors 209 during precharging operation. In some alternative embodiments, precharging/clamping controller 248 may operate contactors (not shown) to place in service, or remove from service, precharge resistors 210 and clamping resistors 246 during precharging operation and clamping resistors 246 during clamping operation.

During normal operation of power generation facility 100, in the example embodiment, solar array 102 generates DC power and transmits the DC power to boost chopper 120. Boost chopper controller 166 controls boost chopper 120 to adjust an output of boost chopper 120. i.e., adjust the voltage and/or current received from solar array 102 such that the power received from solar array 102 is increased and/or enhanced.

Inverter controller 168, in the example embodiment, controls a switching of inverter switches 150 to adjust an output of inverter 130. More specifically, in the example embodiment, inverter controller 168 uses a suitable control algorithm, such as pulse width modulation (PWM) and/or any other control algorithm, to transform the DC power received from boost chopper 120 into three phase AC power signals. Alternatively, inverter controller 168 causes inverter 130 to transform the DC power into a single phase AC power signal or any other signal that enables power converter 104 to function as described herein. In the example embodiment, each phase of the AC power is filtered by AC filter 184, and the filtered three phase AC power is transmitted to electrical distribution network 106.

During precharging operation of power generation facility 100, i.e., when starting power generation facility 100, in the example embodiment, precharging/clamping controller 248 closes contactors 209 to energize DC conduits 240 and 242 from electrical distribution network 106 through diodes 228, 230, 232, 234, 236, and 238 as indicated by precharging circuit current transmission arrows 250. Precharge resistors 210 and clamping resistors 246 facilitate controlling a rate of change of the voltage on DC buses 132 and 133. Once a predetermined voltage is attained on DC buses 132 and 133, precharging/clamping controller 248 opens contactors 209 and current transmission as indicated by arrows 250 is stopped and overvoltage clamping of DC buses 132 and 133 is enabled.

During clamping operation of power generation facility 100, i.e., when there is a voltage increase on DC buses 132 and 133 due to an unplanned grid transient event such as an LVRT or ZVRT event, precharging/clamping controller 248 switches switching devices 214 to the ON condition. Controller 248 uses a suitable control algorithm, such as PWM and/or any other control algorithm, to transmit electric current from positive DC bus 132 through clamping resistors 246, through switching devices 214, through clamping resistors 246, and to negative DC bus 133, as indicated by clamping circuit current transmission arrows 252. Diodes 228 through 238 prevent reverse current transmission therethrough. Contactors 210 remain open to isolate switching devices 214 from electrical distribution network 106.

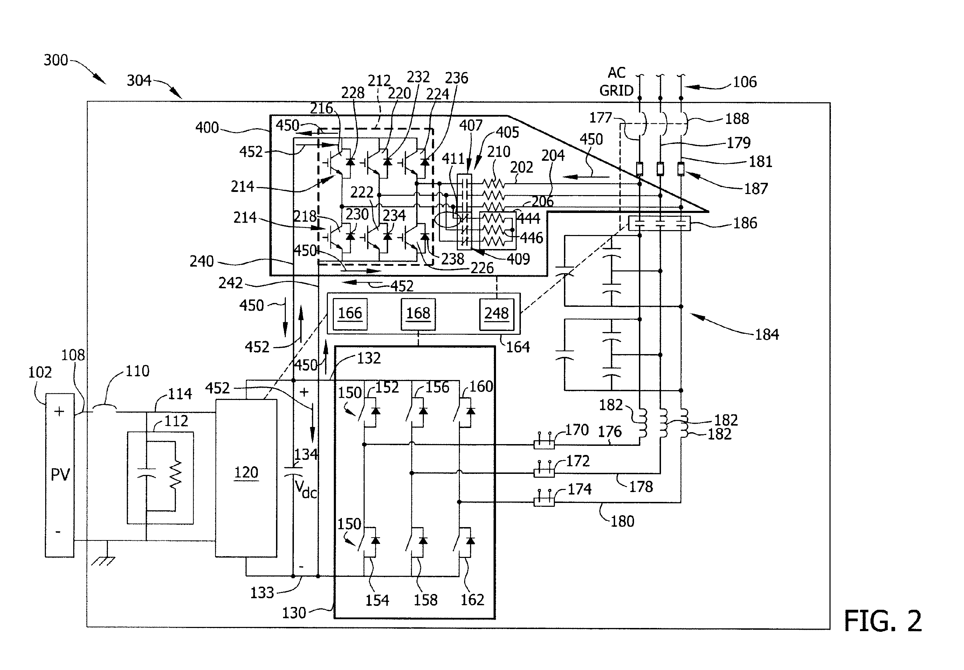

FIG. 2 is a schematic diagram of an alternative example renewable electric power generation facility 300 that is substantially similar to renewable electric power generation facility 100 (shown in FIG. 1) with the exception that facility 300 includes an alternative power converter 304. In this alternative embodiment, power converter 304 is similar to power converter 104 (shown in FIG. 1) with the exception that power converter 304 includes an alternative combined precharging and clamping circuit 400 that is similar to combined precharging and clamping circuit 200 (shown in FIG. 1) with the following exceptions.

Combined precharging and clamping circuit 400 includes a contactor device 405 that includes a set of normally open precharge contactors 407 coupled to precharge resistors 210 and switching devices 214. Contactor device 405 also includes a set of normally closed clamping contactors 409 coupled to switching devices 214 by a plurality of clamping conduits 411. In the example embodiment, contactor device 405 is any contactor device and contactors 407 and 409 are any contactors that enable operation of circuit 400 as described herein, including, without limitation, pairs of precharge contactors 407 and clamping contactors 409 defining a single unitary contactor having two sets of connection terminals, i.e., each contactor including a normally closed terminal and a normally open terminal. Alternatively, in some embodiments, precharge contactors 407 define a first synchronized device and clamping contactors 409 define a second synchronized device, wherein both synchronized devices include a plurality of synchronized contacts.

Clamping contactors 409 are coupled to an alternative resistor bank 444 that includes a plurality of resistors 446. In contrast to precharging and clamping circuit 200, precharging and clamping circuit 400 does not include resistors 246 coupled to DC conduits 240 and 242.

During precharging operation of power generation facility 300, i.e., when starting power generation facility 300, in this alternative embodiment, precharging/clamping controller 248 closes precharge contactors 407 to energize DC conduits 240 and 242 from electrical distribution network 106 through diodes 228, 230, 232, 234, 236, and 238 as indicated by precharging circuit current transmission arrows 450. Clamping contactors 409 are mechanically and/or electrically interlocked with precharge contactors 407 such that the "open" and "closed" conditions of contactors 407 and 409 are in opposition to each other. Therefore, during precharging operation, clamping contactors 409 are open. Precharge resistors 210 facilitate controlling a rate of change of the voltage on DC buses 132 and 133. Once a predetermined voltage is attained on DC buses 132 and 133, precharging/clamping controller 248 opens precharge contactors 407, closes clamping contactors 409, and current transmission as indicated by arrows 450 is stopped and overvoltage clamping of DC buses 132 and 133 is enabled.

During clamping operation of power generation facility 100, i.e., when there is a voltage increase on DC buses 132 and 133 due to an unplanned grid transient event such as an LVRT or ZVRT event, precharging/clamping controller 248 switches switching devices 214 to the ON condition. Also, controller 248 uses a suitable control algorithm, such as PWM and/or any other control algorithm, to transmit electric current from positive DC bus 132 through switching devices 214, through clamping resistors 446, and to negative DC bus 133, as indicated by clamping circuit current transmission arrows 452. Diodes 228 through 238 prevent reverse current transmission therethrough. Precharge contactors 407 remain open to isolate switching devices 214 from electrical distribution network 106.

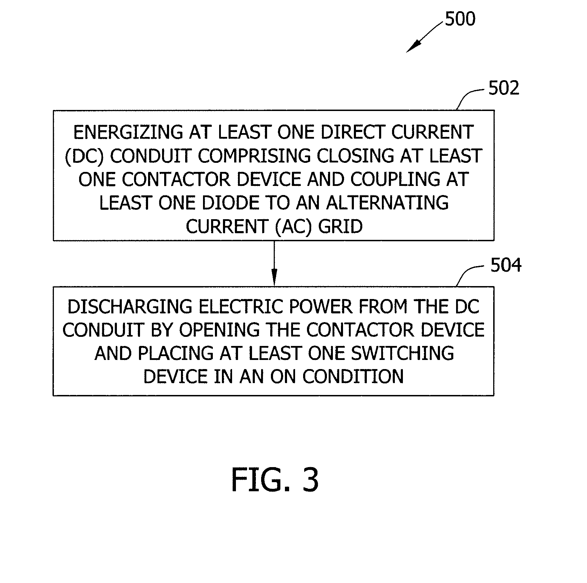

FIG. 3 is a flow chart of an example method 500 of operating renewable electric power generation facilities 100 and 300 (shown in FIGs. 1 and 2, respectively). At least one direct current (DC) conduit 132/133/240/242 (shown in FIGs. 1 and 2) is energized 502 comprising closing at least one contactor device 208/407 (shown in FIGs. 1 and 2, respectively) and coupling at least one diode 228 through 238 (shown in FIGs. 1 and 2) to an alternating current (AC) source, i.e., electrical distribution network 106 (shown in FIGs 1 and 2). Electric power from DC conduit 132/133/240/242 is discharged 504 by opening contactor device 208/407 and placing at least one switching device 214 in an on condition.

Alternative embodiments of power generation facilities 100 and 300 (shown in FIGs. 1 and 2, respectively) include other power generation devices that generate AC power, e.g., wind turbines, in contrast to the DC power generated by solar array 102 (shown in FIGs. 1 and 2). Generally, a wind turbine includes a rotor that includes a rotatable hub assembly having multiple blades. The blades transform wind energy into a mechanical rotational torque that drives one or more generators via the rotor. Variable speed operation of the wind turbine facilitates enhanced capture of energy when compared to a constant speed operation of the wind turbine. However, variable speed operation of the wind turbine produces electric power having varying voltage and/or frequency. More specifically, the frequency of the electric power generated by the variable speed wind turbine is proportional to the speed of rotation of the rotor. Typically, full power conversion assemblies, i.e., alternative embodiments of power converters 104 and 304 (shown in FIGs. 1 and 2, respectively) that include an electrical rectification device, may be coupled between the wind turbine's electric generator and electrical distribution network 106 (shown in FIGs. 1 and 2). The full power conversion assembly receives the electric power from the wind turbine generator and transmits electricity having a fixed voltage and frequency for further transmission to electrical distribution network 106.

In these alternative embodiments, the full power conversion assemblies include rectifiers for converting the AC generated by the wind turbine generator to DC power. Also, such full power conversion assemblies include an inverter substantially similar to inverter 130 (shown in FIGs. 1 and 2) coupled to the rectifier by a DC bus network similar to the DC link defined by DC buses 132 and 133 (both shown in FIGs. 1 and 2) to convert the DC power to AC power. Further, the rectifiers and inverters in such full power conversion assemblies include a plurality of semiconductor devices similar to inverter switches 150 (shown in FIGs. 1 and 2) within inverter 130. Moreover, such rectifiers and inverters 130 are fully scalable for electric power conversion applications of any size, any voltage, any number of phases, and any frequencies.

The above-described embodiments facilitate combining precharging and clamping circuits for power converters coupled to renewable energy sources into one circuit. Specifically, the combined precharging and clamping circuit described herein uses common equipment to facilitate maintaining voltage on DC buses of power converters within predetermined parameters during normal operation and unplanned gird events, such as, LVRT and ZVRT transients. As described herein, such combinations facilitate decreasing cost and space requirements of renewable energy resource facilities, thereby facilitating increased use of renewable energy sources within a mixed-source electric power system.

Example embodiments of an electric power generation facility, electric power conversion apparatus, and combined precharging and clamping circuits, and methods for operating the same are described above in detail. The methods, facilities, systems, and apparatus are not limited to the specific embodiments described herein, but rather, components of the facilities, systems, and apparatus, and/or steps of the methods may be utilized independently and separately from other components and/or steps described herein. For example, the power converters, combined precharging and clamping circuits, and methods may also be used in combination with other power conversion apparatus and methods, and are not limited to practice with only the power systems as described herein. Rather, the example embodiment can be implemented and utilized in connection with many other electric power conversion applications.

Although specific features of various embodiments of the invention may be shown in some drawings and not in others, this is for convenience only. In accordance with the principles of the invention, any feature of a drawing may be referenced and/or claimed in combination with any feature of any other drawing.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. A power converter (104) comprising:
a plurality of direct current (DC) conduits (132/133); and,
a precharging and clamping circuit (200/400) coupled to said DC conduits, said precharging and clamping circuit comprising:
at least one diode (228/230/232/234/236/238);
at least one switching device (212/214/216/218/220/222/224/ 226) coupled in parallel with said diode; and,
at least one contactor device (208/209/405/407/409) coupled to an alternating current (AC) source (106) and said diode, wherein said contactor device is configured to facilitate alternating said precharging and clamping circuit between precharging operation and voltage clamping operation.

2. A power converter (104) in accordance with claim 1, further comprising a plurality of resistive devices (210/244/246/444/446) coupled to said switching device (212/214/216/218/220/222/224/226).

3. A power converter (104) in accordance with claim 2, wherein said resistive devices (210/244/246/444/446) comprise a plurality of precharge resistors (210) coupled to said contactor device (208/209/405/407/409) and the AC source (106).

4. A power converter (104) in accordance with claim 2 or claim 3, wherein said resistive devices (210/244/246/444/446) comprise a plurality of clamping resistors (244/246/444/446) coupled to said switching device (212/214/216/218/220/222/224/226).

5. A power converter (104) in accordance with any preceding claim, wherein said precharging and clamping circuit (200/400) further comprises:
a DC precharging current transmission circuit comprising said diode (228/230/232/234/236/238) and said contactor device (208/209/405/407/409); and,
a DC clamping current transmission circuit comprising said switching device (212/214/216/218/220/222/224/226) coupled to at least one clamping resistor (244/246/444/446).

6. A power converter (104) in accordance with any preceding claim, wherein said contactor device (208/209/405/407/409) comprises at least one precharge contactor (209/411) positioned between the AC source (106) and said switching device (212/214/216/218/220/222/224/226), said precharge contactor energizes said DC conduits (132/133) to a predetermined DC voltage when said precharge contactor is placed into a closed condition.

7. A power converter (104) in accordance with any preceding claim, wherein said switching device (212/214/216/218/220/222/224/226) comprises a fast switching device (214/216/218/220/222/224/226).

8. A power converter (104) in accordance with any preceding claim, wherein said contactor device (405) comprises a plurality of contactor devices (407/409) comprising:
at least one precharge contactor (407) configured to couple the AC source (106) to said diode (228/230/232/234/236/238) when said precharge contactor is in a closed condition; and,
at least one clamping contactor (409) configured to couple said switching device (212/214/216/218/220/222/224/226) to a clamping resistor (244/246/444/446) when said clamping contactor is in a closed condition.

9. A power converter (104) in accordance with claim 8, wherein said contactor assembly (405) is configured such that said precharge contactor (407) is in a closed condition when said clamping contactor (409) is in an open condition and said precharge contactor is in an open condition when said clamping contactor is in a closed condition.

10. A renewable energy generation facility (100/300) comprising:
at least one renewable energy source (102);
a power converter (104) in accordance with any preceding claim coupled to said renewable energy source.

11. A method of operating a renewable electric power generation facility (100/300), said method comprising:
energizing at least one direct current (DC) conduit (132/133) comprising closing at least one contactor and coupling at least one diode to an alternating current (AC) source (106); and,
discharging electric power from the DC conduit (132/133) by opening the contactor and placing at least one switching device in an on condition.

12. A method in accordance with claim 11, wherein closing at least one contactor and coupling the diode to the AC source (106) comprises energizing a DC precharging current transmission circuit within a combined precharging and clamping circuit.

13. A method in accordance with claim 11 or claim 12, wherein placing the switching device in an on condition comprises energizing a DC clamping current transmission circuit within a combined precharging and clamping circuit, and preferably energizing the DC clamping current transmission circuit comprises transmitting electric power through at least one clamping resistor (244/246/444/446).

14. A method in accordance with claim 11, 12 or 13, wherein closing at least one contactor device comprises:
closing at least one precharge contactor and coupling the AC source (106) to the diode; and,
opening at least one clamping contactor and uncoupling the switching device from a clamping resistor (244/246/444/446).

15. A method in acco)rdance with claim 11, 12, 13 or 14, wherein opening the contactor comprises:
opening a precharge contactor and uncoupling the AC source (106) from the diode; and,
closing a clamping contactor and coupling the switching device to a clamping resistor (244/246/444/446).
